Europäisches Patentamt

European Patent Office

Office européen des brevets

(11) Publication number: **0 051 429**
**B1**

(12) **EUROPEAN PATENT SPECIFICATION**

(45) Date of publication of patent specification: **06.08.86**

(21) Application number: **81305078.8**

(22) Date of filing: **27.10.81**

(51) Int. Cl.⁴: **G 11 B 23/42, G 11 B 7/24, G 11 B 27/10**

(54) Optical memory device and system.

(30) Priority: **28.10.80 JP 151269/80**

(43) Date of publication of application:
**12.05.82 Bulletin 82/19**

(45) Publication of the grant of the patent:
**06.08.86 Bulletin 86/32**

(84) Designated Contracting States:
**DE FR GB IT NL**

(56) References cited:
**DE-A-2 721 334**
**DE-B-2 102 876**
**FR-A-2 461 324**
**US-A-3 819 281**

**IEEE SPECTRUM, vol. 16, no. 2, February 1979,
New York, G.C. KENNEY et al. "An optical disk
replaces 25 mag tapes", pages 33-38**

(73) Proprietor: **Kabushiki Kaisha Toshiba
72, Horikawa-cho Saiwai-ku
Kawasaki-shi Kanagawa-ken 210 (JP)**

(72) Inventor: **Ando, Hideo c/o Patent Division
Tokyo Shibaura Denki K. 72 Horikawa-cho
Saiwai-ku Kawasaki-shi Kanagawa-ken (JP)**

(74) Representative: **Shindler, Nigel et al
BATCHELLOR, KIRK & EYLES 2 Pear Tree Court
Farringdon Road
London EC1R 0DS (GB)**

Courier Press, Leamington Spa, England.

## Description

This invention relates to the recording of information on a rotating disc, in a form which can be written and read optically through the projection of a focused laser beam. The information is typically recorded in tracks on the surface of the disc. With the disc rotating, in order to determine the precise starting point (heading) in the desired track at which writing or reading should begin, it is necessary to provide a datum point or position signal common to all tracks.

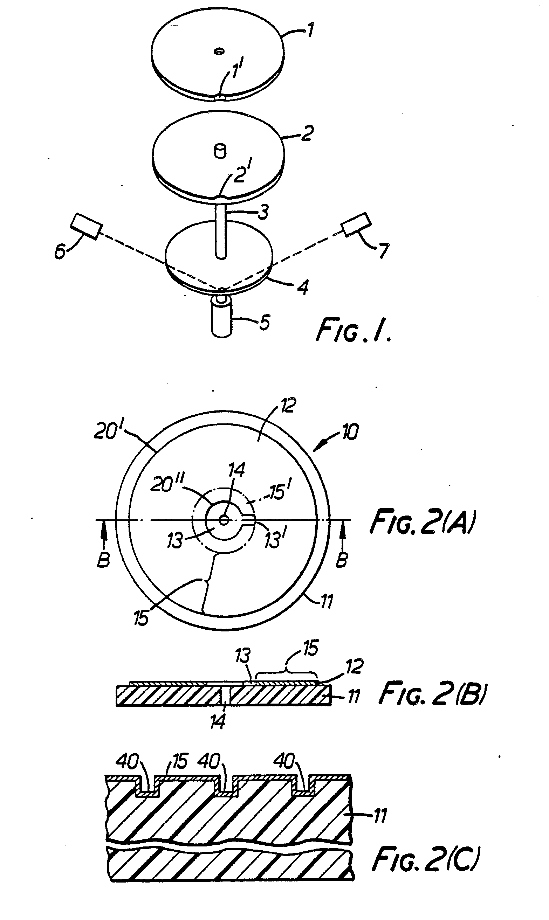

A conventional method of providing this datum point is shown in Figure 1, which is a schematic perspective view showing an optical disc 1 being driven by a disc drive. The turntable 2 of the disc drive receives its rotational energy from the motor 5 through a centre shaft 3. Under the rotating disc 2, a timing disc 4 is coaxially supported with the rotating disc 2 on the centre shaft. On the surface of the timing disc 4 is a timing mark used as the datum. A light source 6 projects light on to the surface of the timing disc 4; and a detector 7 detects the amount of this light which is reflected from the surface. In order properly to position the optical disc 1 with respect to the timing disc 4 and to prevent relative rotational movement between the two (since movement would cause reading or recording errors), a projection 2' is provided on the edge of rotating disc 2, and a recess 1' is provided in the edge of the optical disc 1. Before rotation begins, when the optical disc 1 is first placed on the rotating disc 2, the projection 2' is coupled with the recess 1'. Determination of the location of information stored on the optical disc 1 is made possible by projecting the light on the surface of the timing disc 4 and detecting (through the detector 7) the variations in the amount of light reflected by the mark.

In the case of this kind of disc drive, however, as it is necessary to have a timing disc 4 in addition to the rotating disc 2, the disc drive is that much more complicated. Furthermore, when installing an optical disc 1 on the rotating disc 2, the operator must be careful to match the recess 1' with the projection 2'. Also, production of optical discs is made more complicated by the need to provide recesses 1' in the edges.

This invention has as one of its objects to simplify the disc drive described above by dispensing with the need for a separate timing disc.

It is known in the technology of magnetic disc drives to provide replaceable disc packs one of the discs of which is provided with a separate, optically detected index mark on its reverse side, as shown in USP 3,819,281. However this arrangement also requires the use of a further marking material in addition to the magnetic recording layer and this also complicates the manufacturing process.

Accordingly, the present invention provides an optical disc memory device for storing optical information comprising a rotatable sub-plate and a layer of light reflecting material formed on the surface of at least one side of the sub-plate and including an annular information recording area, characterised in that the said layer at its inner or outer edge, includes at least one annular region in which the layer is discontinuous in the circumferential direction, whereby, in use, the discontinuity can be optically detected so as to provide an indication of the rotational position of the disc.

When such an optical disc memory device is rotated, passage of a given point in the position signal area is detected as the datum from which the writing or reading location, in the recording area, is determined. Placing the position signal area directly on the optical memory device, achieves simplification of the disc drive by eliminating the need for a timing disc. It also frees the operator from having to correctly mount the optical memory device on the disc drive, to match the datum point of the timing disc. After mounting the optical memory device on the rotating disc, it is only necessary to direct a light at the position signal area of the optical memory device and to detect the reflected or transmitted light, in order to establish the datum.

Accordingly, the invention also extends to an optical memory system for writing optical information on, or reading optical information from, and optical disc memory device having a layer of light reflecting material on one side thereof including both an annular information recording area and at its innner or outer edge at least an annular region in which the layer is discontinuous, the optical memory system comprising: rotating means for rotating the optical memory device at a known speed; a light source positioned to direct light on the said annular region; a light detector positioned to detect light reflected from the said annular region as the optical memory device rotates; optical head means adjacent to the information recording area for reading optical information from, or writing optical information on, the information recording area; and controlling means coupled to the light detector and the optical head means for actuating the optical head means in response to a position signal from the light detector.

As the position signal area and the information recording area are formed of the same material, both can easily be formed at the same time by mounting a single mask on the substrate and evaporating the light reflecting material over it. As the information recording area and the position signal area are made of the same material in this way, there is no possibility of being unable to correctly reproduce the recorded information due to the discoloration or deterioration of just the position signal area. By using stable, long-lasting material for the information recording area, it becomes possible to maintain the position signal area made of the same material in the same condition for a long time. Finally, a position signal area formed in this way is not easily peeled from the sub-plate; thus it is always possible to pick up a stabilised datum point from the position signal area.

The invention will be more readily understood by way of example from the following description of optical memory devices in accordance therewith, and of read/write system embodying the devices. Reference is made to the accompanying drawings, in which

Figure 1 is the perspective view showing a known disc drive;

Figure 2(A) is the schematic plan view showing an optical memory device forming an embodiment of this invention;

Figure 2(B) is the section on line B—B of Figure 2(A);

Figure 2(C) is the enlarged sectional view showing a part of the optical memory device of Figure 2(B);

Figure 3 is the perspective view showing the subplate and a mask for the purpose of forming the light-reflecting layer on the subplate;

Figure 4 is the schematic view showing the optical memory system which reads and writes the information using the optical memory device shown in Figure 2;

Figure 5(A) is the schematic plan view showing a second form of optical memory device;

Figure 5(B) is a section on line B—B of Figure 5(A);

Figure 6(A) is the schematic plan view showing a third form of optical memory device;

Figure 6(B) is a section on line B—B of Figure 6(A);

Figure 7(A) is the schematic perspective view showing a further form of the optical memory device; and

Figure 7(B) is a section on line B—B of Figure 7(A).

The optical memory device 10 shown in Figure 2 is formed as follows. A disc-shaped subplate 11 having a diameter of about 30 cm and a thickness of 0.2 mm to 2 mm is moulded of transparent synthetic resin, such as the resins of polyacrylic acid, polymethacrylic acid and their lower grade alkylesters, and a centre hole 14 is bored. On the upper surface of this subplate 11 and towards the outer edge thereof, a spiral track 40 is formed with about 20,000 grooves at a 2 to 3 µm pitch as shown in Figure 2(C), the width of the groove being 0.6 to 0.7 µm and the depth being 50 to 100 nm. On the surface of the subplate 11, by evaporation (for example by spatter evaporation) of light-reflecting material such as Al or Te, an annular light-reflecting area 12 is formed with a substantially uniform thickness in the region of 20 to 60 nm. The outer edge of this annular area is a circle 20' about 290 mm in diameter with its centre on the central hole 14 of the subplate 11, while the inner edge is a circle 20" about 120 mm in diameter with its centre on the central hole 14 of the subplate 11.

Within the reflective area 12 there is a non-reflective area 13 which at one angular position projects 5 mm outwardly into area 12 as a radial finger 13'. The projection 13' of the non-reflecting area is formed by masking the appropriate part of the subplate 11 during the deposition of the reflective material. In the light-reflecting area 12, the information recording area 15 is the entire area between the outer edge 20' and the circle shown in chain line in Figure 2(A), centred on the centre hole 14 and passing through the end of the finger 13' (a circle of about 130 mm diameter). In the information recording area 15, information is recorded by a laser beam which forms pits in the grooves of a track 40 shown in Figure 2(C).

The annulus within the chain-line circle including the reflective finger 13' is the position signal area 15' in which the finger 13' acts as a non-reflective mask for producing the timing signal for recording and reading the information in the information recording area 15.

One method of forming the light-reflecting area 12, is shown in Figure 3. Two masks are attached to the subplate. The first mask 16' is a ring with its outside diameter equal to that of the subplate and its inside diameter equal to the desired outer diameter of the light-reflecting area (circle 20'). The second mask 17' is a ring with its inside diameter equal to that of the centre hole 14 and its outside diameter equal to the desired inner diameter of the light-reflecting area (circle 20") and having an outward projecting finger of the same shape as the finger 13'. After these two masks 16' and 17' are attached, light reflective material is evaporated on the unmasked surface of the subplate 11, to form the light-reflecting area 12. Vacuum evaporation or ion evaporation, as well as spatter evaporation, can be adopted.

Figure 4 schematically shows an optical memory system which reads and writes information using the optical memory device 10. As shown, the memory device 10 is carried and rotated by a turntable 30 which is driven by a drive unit (not shown) through shaft 45. A laser oscillator 72 produces a laser beam, which is modulated by a modulator 74. The modulator 74 is connected to the write and read control unit (not shown) and on-off modulates the incident laser beam according to signal output (i.e. picture information and index information) from the write and read control unit. An optical head 76 receives the modulated laser beam and projects it on to the optical memory device 10 which rotates at constant speed. The optical head 76 includes a galvanometer 80 which is a mirror rockable along a radius of the optical memory device 10 and a lens system 82 for focusing the laser beam from the galvanometer 80 on the optical memory device 10.

The reflective area of the optical memory device 10 is formed on the upper surface of the plastic subplate 11, to form an information recording area 15 and a position signal area 15' as described. Within the track 40, the Te layer is vaporized according to the modulating content of the incident light beam $L_1$, whereby a corresponding train of pits is formed. In this way, picture information is recorded in the form of the spiral track 40 along the groove. When reading out the record of picture information imprinted on the optical memory device 10 in the above manner, the optical memory device 10 is again rotated at a constant speed, and a laser beam $L_2$ produced in the laser oscillator 72 is focused by the optical head 76 on to the record track, and scanning for reading is effected. The recorded picture information is reproduced as light reflected selectively by the optical memory device. The reflected light is transmitted through the optical head 76 and reflected by a reflector 84 on to a photo-electric converter 86, which converts the incident light to an electrical signal. An analog-to-digital (A—D) converter 87 is connected to the photoelectric converter 86, and converts the analog signal output to the photoelectric converter 86 into a digital signal suitable for the write and read control unit. A detector 88 is also connected to the photoelectric converter 86 and produces a control signal corresponding to the deviation of the laser beam $L_2$ from the centre of the bit train of the record track. A galvanometer driver 89 is connected to the detector 88 and drives the galvanometer 80 according to the control signal from the detector 88.

A linear actuator 90 changes the radial position of the optical head 76 relative to the optical memory device 10 according to a control signal from the control circuit 94. The linear actuator 90 is provided with an optical scale 92 for detecting the radial position of the optical head 76, and scale 92 supplies a position signal to the control circuit 94 every time the optical head 76 is shifted in position. The control circuit 94 supplies control signals to the main control unit (not shown), laser oscillator 72, linear actuator 90 and the drive unit (not shown) for driving the optical memory device 10.

As shown, the optical memory device 10 is loaded coaxially on to the upper surface of the turntable 30. The optical head 76, positioned outward of the turntable and below the lower surface of the optical memory device 10, picks up the picture information and index information recorded on the optical memory device 10 or records the picture information and the like on the optical memory device.

Light emitted from a light source 31, constituted by an LED adjacent to the drive shaft 45, is reflected by the position signal area 15' of the device 10; reflected light is received by the light detector 32. When reflected light is not received by the detector 32, that is, when light from the light source 31 illuminates the non-reflective mark 15' of the position signal area 15', the light detector 32 produces a position signal, representing a time datum for the rotation of the optical memory device 10 and sends it to the main control unit. The control circuit 94 sends a read or write start signal to the optical head 76 when the correct amount of time has elapsed (as determined by the main control unit) after the position signal. As a result, the optical head 76 starts to operate, reading or writing information, when it is adjacent to the desired position in the requested track.

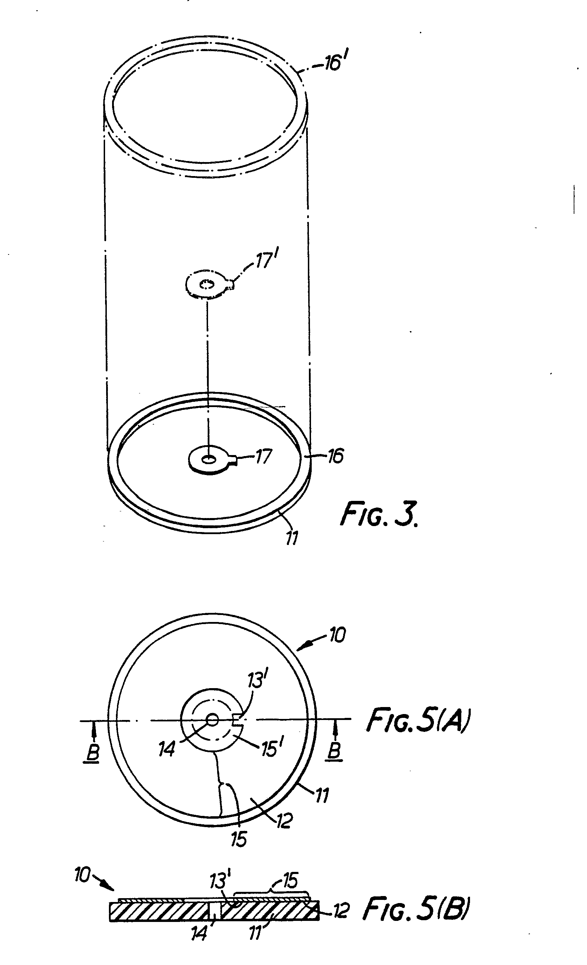

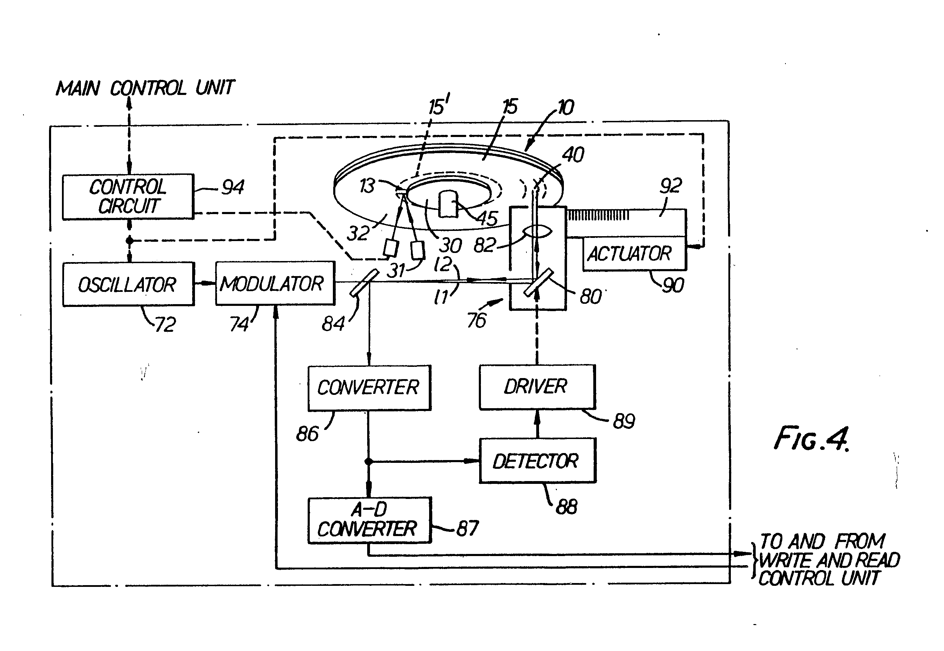

The optical memory device of Figure 5A and 5B is generally similar to that of Figures 1 and 2 except that the position signal area 15' is non-reflective apart from the finger 13' which in this instance is reflective, being formed as an inward extension of the reflective area 15 during the deposition of the latter. The light detector 7 (Figure 1) then emits a position signal when it receives light reflected from the finger 13'.

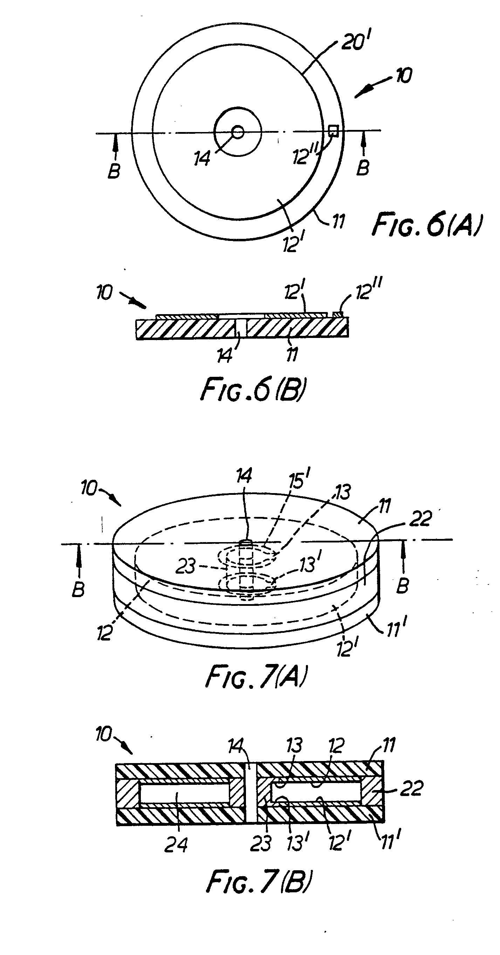

In the embodiment of Figures 6(A) and 6(B), the position signal area is formed by the annulus outside the circle 20' forming the outer boundary of the information recording area. As before, that annulus is non-reflective, but in this instance has deposited on it a single mark 12" of reflective material at the same time as the reflective layer 12' is deposited. The light source 6 and the light detector 7 (Figure 1) are aimed at the annulus so that the detector receives light reflected from reflective spot 12" once in each revolution of the disc.

Other modifications may be made. Thus, as shown in Figures 7(A) and 7(B) the optical memory device may consist of two discs, either of which can be used for recording and for reading according to which side is placed on the turntable 30 (Figure 4).

The above explanation of the invention refers to the embodiments shown. However, the invention can include other modifications so far as the essential features of the invention are not changed.

The optical memory device 10' of Figure 7 is formed with two subplates similar to that of Figure 2; those subplates 11, 11' are secured together through supporting members 22 and 23 with the light-reflective layers 12 and 12', and the projected parts 13 and 13' of the position signal areas, facing each other, scanning being effected through the respective subplate. The optical memory device 10' has twice the memory capacity of the optical memory device 10 shown in Figure 2.

## Claims

1. An optical disc memory device for storing optical information comprising a rotatable subplate (11) and a layer of light reflecting material formed on the surface of at least one side of the sub-plate and including an annular information recording area (15), characterised in that the said layer at its inner or outer edge, includes at least one annular region (15') in which the layer is discontinuous in the circumferential direction, whereby, in use, the discontinuity can be optically detected so as to provide an indication of the rotational position of the disc.

2. An optimal disc memory device as claimed in claim 1, in which the discontinuity is formed by a reflecting mark (13) in the said annular region (15').

3. An optical disc memory device as claimed in claim 2 in which the mark (13') is continuous with the light reflecting material of the information recording area.

4. An optical disc memory device as claimed in claim 2, in which the mark (12″) is separate from the light reflecting material of the information recording area (15).

5. An optical disc memory device as claimed in claim 1, in which the discontinuity is formed by a non-reflecting mark (13′) within the said annular region.

6. An optical disc memory device as claimed in any preceding claim, in which the material (12) in the annular region (15′) and in the information recording area (15) is substantially uniform in thickness.

7. An optical disc memory device as claimed in any one of the preceding claims, including a second sub-plate (11′) which is similar to the first sub-plate (11) and has a similar information recording area (15) and an annular region (15′) formed thereon, and which is secured in spaced disposition by supporting members (22) with the respective annular regions (15′) and information recording areas (15) facing one another.

8. An optical memory system for writing optical information on, or reading optical information from, an optical disc memory device having a layer of light reflecting material on one side thereof including both an annular information recording area (15) and at its inner or outer edge at least an annular region in which the layer is discontinuous, the optical memory system comprising: rotating means for rotating the optical memory device at a known speed; a light source (6) positioned to direct light on the said annular region (15′); a light detector (7) positioned to detect light reflected from the said annular region as the optical memory device rotates; optical head means adjacent to the information recording area for reading optical information from, or writing optical information on, the information recording area; and controlling means coupled to the light detector and the optical head means for actuating the optical head means in response to a position signal from the light detector.

**Patentansprüche**

1. Optischer Plattenspeicher zur Speicherung optischer Information, mit einer drehbaren Grundplatte (11) und einer Schicht von lichtreflektierendem Material, das auf der Oberfläche wenigstens einer Seite der Grundplatte gebildet ist und einen ringförmigen Informationsaufzeichnungsbereich (15) aufweist, dadurch gekennzeichnet, daß die Schicht an ihrerer inneren oder äußeren Kante wenigstens einen ringförmigen Bereich (15′) aufweist, in dem die Schicht in Umfangsrichtung diskontinuierlich ist, wodurch bei Gebrauch die Diskontinuität optisch abgetastet werden kann, um so eine Kennung für die Drehlage der Platte zu bilden.

2. Optischer Plattenspeicher nach Anspruch 1, dadurch gekennzeichnet, daß die Diskontinuität durch eine reflektierende Marke (13) in dem Ringbereich (15′) gebildet ist.

3. Optischer Plattenspeicher nach Anspruch 2, dadurch gekennzeichnet, daß die Marke (13′) fortlaufend mit dem lichtreflektierenden Material des Informationsaufzeichnungsbereichs ist.

4. Optischer Plattenspeicher nach Anspruch 2, dadurch gekennzeichnet, daß die Marke (12″) von dem lichtreflektierenden Material des Informationsaufzeichnungsbereiches (15) getrennt ist.

5. Optischer Plattenspeicher nach Anspruch 1, dadurch gekennzeichnet, daß die Diskontinuität durch eine nichtreflektierende Marke (13′) innerhalb des ringförmigen Bereichs gebildet ist.

6. Optischer Plattenspeicher nach einem der vorhergehenden Ansprüche, dadurch gekennzeichnet, daß das Material (12) in dem ringförmigen Bereich (15′) und in dem Informationsaufzeichnungsbereich (15) im wesentlichen gleichförmig in der Dicke ist.

7. Optischer Plattenspeicher nach einem der vorhergehenden Ansprüche, dadurch gekennzeichnet, daß eine zweite Grundplatte (11′) vorgesehen ist, die gleich mit der ersten Grundplatte (11) ist und einen gleichen Informationsaufzeichnungsbereich (15) und einen ringförmigen Bereich (15′) darauf aufweist und die durch Lagerglieder (22) im Abstand gehalten ist, wobei die jeweiligen ringförmigen Bereiche (15′) und die Informationsaufzeichnungsbereiche (15) einander gegenüberliegen.

8. Optisches Speichersystem zur Aufzeichnung optischer Information auf oder zum Lesen optischer Information von einer optischen Speicherplatteneinrichtung, die eine Schicht von lichtreflektierendem Material auf der einen Seite davon und

einen ringförmigen Informationsaufzeichnungsbereich (15) und an seiner inneren oder äußeren Kante wenigstens einen Ringbereich aufweist, in dem die Schicht diskontinuierlich ist, wobei das optische Speichersystem aufweist: Rotationsmittel zur Drehung der optischen Speichereinrichtung mit einer bekannten Geschwindigkeit; eine Lichtquelle (6), die Licht auf den genannten, ringförmigen Bereich (15′) richtet; einen Lichtdetektor (7), der so angeordnet ist, daß er von dem genannten, ringförmigen Bereich bei Drehung der optischen Speichereinrichtung reflektiertes Licht abtastet; einen optischen Kopf, benachbart zu dem Informationsaufzeichnungsbereich, zum Ablesen optischer Information von oder zum Aufschreiben optischer Information auf dem Informationsaufzeichnungsbereich; und Steuermittel, die mit dem Lichtdetektor und dem optischen Kopf gekoppelt sind und den optischen Kopf in Abhängigkeit zu einem Positionssignal von dem Lichtdetektor betätigen.

**Revendications**

1. Dispositif de mémoire optique à disque pour conserver des informations optiques qui comprend une sous-plaque tournante (11) et une couche de matière réfléchissante formée sur la surface de l'un, au moins, des côtés de la sous-plaque et incluant une zone d'enregistrement d'informations annulaires (15), caractérisé en ce que ladite couche comporte, à son bord intérieur ou extérieur, au moins, une région annulaire (15') dans laquelle la couche est discontinue dans le sens circonférentiel, ce qui fait que, pendant l'utilisation, cette discontinuité peut être détectée par voie optique afin de fournir une indication de la position angulaire ou de rotation du disque.

2. Dispositif de mémoire optique selon la revendication 1, caractérisé en ce que cette discontinuité est formée par une marque réfléchissante (13) située dans ladite région annulaire (15').

3. Dispositif de mémoire optique selon la revendication 2, caractérisé en ce que la marque (13') est continue avec la matière réfléchissante de la zone d'enregistrement d'informations.

4. Dispositif de mémoire optique selon la revendication 2, caractérisé en ce que la marque (12") est séparée de la matière réfléchissante de la zone d'enregistrement d'informations (15).

5. Dispositif de mémoire optique selon la revendication 1, caractérisé en ce que ladite discontinuité est constituée par une partie non-réfléchissante (13') située dans ladite région annulaire.

6. Dispositif de mémoire optique selon l'une quelconque des revendications précédentes, caractérisé en ce que la matière (12) de la région annulaire (15') et celle de la zone d'enregistrement d'informations (15) ont une épaisseur pratiquement uniforme.

7. Dispositif de mémoire optique selon l'une quelconque des revendications précédentes, caractérisé en ce qu'il comprend une second sous-plaque (11') qui est semblable à la première (11), et qui a une zone d'enregistrement d'informations (15) similaire et une région annulaire (15') formée sur celle-ci, et qui est fixée avec un certain espacement par des éléments de support (22) aux régions annulaires correspondantes (15') et aux zones d'enregistrement d'informations (15) qui se font faces.

8. Système de mémoire optique pour écrire des informations ou pour lire de informations optiques sur un dispositif de mémoire optique ayant une couche de matière réfléchissante sur un côté, au moins incluant, à la fois, une zone d'enregistrement d'informations annulaires (15) et à son bord intérieur ou extérieur, au moins, une région annulaire dans laquelle la couche est discontinue, le système de mémoire optique comprenant des moyens pour faire tourner le dispositif de mémoire optique à une vitesse connue; une source lumineuse (6) placée pour diriger de la lumière sur ladite région annulaire (15'); un détecteur de lumière (7) placé pour détecter la lumière réfléchie par ladite région annulaire quand le dispositif de mémoire optique tourne; une tête optique près de la zone d'enregistrement d'informations afin de lire ou d'écrire des informations optiques sur la zone d'enregistrement d'informations; et des moyens de commande couplés au détecteur de lumière et à la tête optique afin d'activer cette dernière en réponse à un signal de position issu du détecteur de lumière.

FIG. 1.

FIG. 2(A)

FIG. 2(B)

FIG. 2(C)

FIG. 3.

FIG. 5(A)

FIG. 5(B)

2

MAIN CONTROL UNIT

Fig.4.

0 051 429

0 051 429

FIG. 6(A)

FIG. 6 (B)

FIG. 7(A)

FIG. 7(B)

4